# EUROPÄISCHE PATENTANMELDUNG

(11) **EP 4 643 731 A1**
(43) Veröffentlichungstag der Anmeldung: **05.11.2025**
(21) Anmeldenummer: 24173766.7
(22) Anmeldetag: 02.05.2024
(51) Int. Cl.: A47J 43/07, A47J 36/34, A47J 47/16

(54) **MOBILES KÜCHENGERÄT**

(71) Anmelder: Vorwerk & Co. Interholding GmbH, 42275 Wuppertal (DE)
(72) Erfinder: VAHLDIEK, Utz, 58332 Schwelm (DE); THIES, Felix, 31303 Burgdorf (DE)
(74) Vertreter: Gille Hrabal Partnerschaftsgesellschaft mbB Patentanwälte

(57) **Zusammenfassung**

Die Erfindung betrifft ein elektrisches Küchengerät (1, 33) mit einem Boden (2), mit an der Unterseite des Bodens (2) vorhandenen Füßen (3, 6) für ein Aufstellen des Küchengeräts (1) auf einen ebenen Untergrund, wobei die Füße (3) in einer Ebene (4) unterhalb des Bodens (2) enden, dadurch gekennzeichnet, dass ein Fuß (3) rutschhemmend ist und ein anderer Fuß ein Gleitfuß (6) ist.

## Beschreibung

Die Erfindung betrifft ein mobiles, aufstellbares Küchengerät. Ein Küchengerät ist ein Gerät, welches in einer Küche eines privaten Haushaltes oder in der Küche eines Gastronomiebetriebes verwendet wird. Ein Küchengerät im Sinne der vorliegenden Erfindung ist ein Gerät, mit dessen Hilfe ein Nahrungsmittel zubereitet werden kann und soll. Die Zubereitung kann ein Erhitzen, Kühlen, Zerkleinern, Mischen und/oder Wiegen des Nahrungsmittels umfassen. Das Küchengerät ist in der Regel ein elektrisches Küchengerät, das elektrischen Strom für seinen Betrieb benötigt. Das elektrische Küchengerät wird also entweder mit einer Batterie betrieben oder es kann mit einem Stromversorgungskabel an eine externe Stromquelle angeschlossen werden.

Ein Küchengerät ist mobil, wenn dieses nicht stationär in einer Küche, so zum Beispiel in Schränken, eingebaut ist und auch nicht dafür bestimmt und geeignet ist, stationär in einer Küche eingebaut zu werden. Ein Küchengerät ist aufstellbar, wenn dieses für seinen Betrieb zum Beispiel auf einer Arbeitsplatte in der Küche aufgestellt wird und aufgestellt werden soll. Der Ort der Aufstellung eines mobilen, aufstellbaren Küchengeräts kann daher verändert werden.

Bei einem mobilen, aufstellbaren Küchengerät ist es wünschenswert, den Ort der Aufstellung leicht ändern zu können.

Es ist Aufgabe der Erfindung, ein Küchengerät weiterzuentwickeln.

Die Aufgabe wird durch ein Küchengerät mit den Merkmalen des ersten Anspruchs gelöst. Die abhängigen Ansprüche betreffen vorteilhafte Ausgestaltungen.

Ein Küchengerät kann zur Lösung der Aufgabe einen Boden aufweisen. Beispielsweise an der Unterseite des Bodens oder bei der Unterseite des Bodens können Füße für ein Aufstellen des Küchengeräts auf einen ebenen Untergrund, so zum Beispiel auf eine Arbeitsplatte in einer Küche, vorhanden sein. Die Füße können in einer Ebene unterhalb des Bodens enden. Die Ebene stimmt mit dem ebenen Untergrund überein, wenn das Küchengerät auf dem ebenen Untergrund auf den Füßen aufgestellt ist.

Ein Fuß kann rutschhemmend im Vergleich zu einem anderen Fuß sein. Der andere Fuß wird nachfolgend Gleitfuß genannt. Das Küchengerät kann dann so an einer Seite angehoben werden, dass sich der rutschhemmende Fuß von dem Untergrund löst. Das Küchengerät kann anschließend mit relativ geringer Kraft entlang des ebenen Untergrunds verschoben werden. Der Ort der Aufstellung des Küchengeräts kann so leicht verändert werden.

Das Küchengerät, das ein elektrisches Küchengerät sein kann, kann ein Bedienfeld umfassen. Das Bedienfeld kann bei einer Seite des Bodens angeordnet sein. Der Schwerpunkt des Küchengeräts kann vom Bedienfeld des Küchengeräts aus gesehen in der hinteren Hälfte des Bodens oder im hinteren Drittel des Bodens vorhanden sein, wobei die Lage des Schwerpunkts in einer Aufsicht auf das Küchengerät gesehen gemeint ist. Ein Gleitfuß kann von dem Bedienfeld aus gesehen hinter dem Schwerpunkt angeordnet sein.

Ein Benutzer wird das Küchengerät so aufstellen wollen, dass das Bedienfeld leicht erreichbar ist. Für ein Verschieben des Küchengeräts wird ein Benutzer daher die Seite des Bodens ergreifen wollen, bei der sich das Bedienfeld befindet. Es ist nun günstig, dass sich der Schwerpunkt vom Bedienfeld aus sowie in Aufsicht auf das Küchengerät gesehen im hinteren Bereich des Küchengeräts befindet, um das Küchengerät mit geringer Kraft anheben zu können. Auch trägt ein Schwerpunkt im hinteren Bereich des Küchengeräts (also in der hinteren Hälfte) dazu bei, dass das Küchengerät an der Seite mit dem Bedienfeld kippsicher angehoben werden kann. Mit hinterem Bereich ist die hintere Hälfte des Küchengeräts gemeint. Günstig ist es dann auch, dass der Gleitfuß vom Bedienfeld aus gesehen hinter dem Schwerpunkt angeordnet ist.

Die rutschhemmende Eigenschaft eines Fußes kann auf einer neigbaren Oberfläche ermittelt werden. Ein Gerät kann beispielsweise zu Prüfzwecken drei rutschhemmende Füße aufweisen und ein anderes Gerät kann zu Prüfzwecken drei Gleitfüße aufweisen. Die beiden Geräte unterscheiden sich dann nur durch die rutschhemmenden Eigenschaften der Füße. Beide Geräte können zu Prüfzwecken auf die neigbare Oberfläche gestellt werden. Die neigbare Oberfläche kann ausgehend von einer geringen Neigung zunehmend stärker geneigt werden. Das Gerät mit den rutschhemmenden Füßen wird dann später, also einer erst bei einer stärkeren Neigung, herunterrutschen im Vergleich zu dem Gerät mit den Gleitfüßen.

Ein Bedienfeld umfasst ein oder mehrere Einrichtungen, über die das Küchengerät bedient werden kann. Eine solche Einrichtung kann ein berührungsempfindliches Display sein. Eine Einrichtung kann ein Schalter sein, über den das Küchengerät bedient werden kann. Eine Einrichtung kann ein Drehknopf und/oder Druckknopf sein, über den das Küchengerät bedient werden kann. Beispielsweise kann über eine solche Einrichtung eine Solltemperatur und/oder eine Drehzahl eines Misch- und/oder Schneidwerkzeugs des Küchengeräts eingestellt und/oder eine Waage aktiviert werden.

Mit Boden ist die Wandung gemeint, die die Unterseite des Küchengeräts bildet, wenn das Küchengerät bestimmungsgemäß auf einem ebenen Untergrund aufgestellt ist.

Eine rutschhemmende Aufstellfläche eines rutschhemmenden Fußes kann aus einem rutschhemmendem Material gebildet sein wie zum Beispiel einem Elastomer oder einem anderen Kunststoff mit hohen Reibungskoeffizienten im Vergleich zu Reibungskoeffizienten von POM oder PE-UHMW. Eine im Vergleich dazu nicht rutschhemmende Aufstellfläche eines Gleitfußes kann aus einem leicht gleitenden Material wie zum Beispiel POM, glasfasergefülltes POM oder PE-UHMW gebildet sein.

MIT POM ist ein Polyoxymethylen gemeint. Es handelt sich um einen hochmolekularen thermoplastischen Kunststoff mit hoher Steifigkeit und einem niedrigen Reibungskoeffizienten, der durch Spritzgießen in eine gewünschte Form gebracht werden kann. Der Fuß oder ein Teil des Fußes kann dann also im Spritzgussverfahren hergestellt werden.

PE-UHMW meint ein ultrahochmolekulares Polyethylen. Ein ultrahochmolekulares Polyethylen weist ebenfalls gute Gleiteigenschaften auf und kann durch Spritzguß verarbeitet werden.

Eine rutschhemmende Aufstellfläche eines rutschhemmenden Fußes kann aus einem härteren Material bestehenden als das Material, aus dem eine im Vergleich dazu nicht rutschhemmende Aufstellfläche eines Gleitfußes gebildet ist. Kratzer auf einer Oberfläche können bei einem Verschieben so verbessert vermieden werden. Härte ist der mechanische Widerstand eines Werkstoffes (Prüfstückes) gegen das mechanische Eindringen eines anderen härteren Körpers (Eindringkörper).

Eine rutschhemmende Aufstellfläche eines rutschhemmenden Fußes kann eine größere Oberflächenrauigkeit aufweisen als eine nicht rutschhemmende Aufstellfläche eines Gleitfußes. Mit Aufstellfläche ist die Fläche des Fußes gemeint, die einen ebenen Untergrund kontaktiert, wenn das Küchengerät auf einem ebenen Untergrund auf dem Fuß aufgestellt ist. Eine Aufstellfläche eines jeden Fußes ist klein im Vergleich zur Fläche des Bodens.

Ein Gleitfuß kann einen anderen Formfaktor, also beispielsweise eine andere Größe und/oder eine andere Form, im Vergleich zu einem rutschhemmenden Fuß haben, um dadurch seine Rutscheigenschaften im Vergleich zum rutschhemmenden Fuß zu verbessern.

Ein jeder Fuß kann gleiche äußere Abmaße sowie gleiche Formen aufweisen, damit Füße gegeneinander getauscht werden können. Die Aufstellfläche eines Fußes kann beispielsweise einen Durchmesser oder eine Länge und/oder Breite von wenigstens 10 mm oder wenigstens 15 mm aufweisen. Die Aufstellfläche eines Fußes kann beispielsweise einen Durchmesser oder eine Länge und/oder Breite von nicht mehr als 40 mm oder nicht mehr als 30 mm aufweisen. Ein jeder Fuß kann beispielsweise 28 mm x 28 mm x 19mm groß sein.

Ein jeder Fuß kann ein oder mehrere gleich geformte Teile mit gleichen Maßen aufweisen, damit Teile von Füßen gegeneinander getauscht werden können. Eine jeder Fuß kann beispielsweise eine gleich geformte und gleich große Kappe aufweisen. Eine Kappe kann so sein, dass ein Fuß mit einer solchen Kappe ein rutschhemmender Fuß ist. Eine andere Kappe kann so sein, dass ein Fuß mit dieser Kappe ein Gleitfuß ist. Durch Austausch von Kappen kann dann die rutschhemmende Eigenschaft eines Fußes geändert werden. Der technische Herstellungsaufwand kann so geringgehalten werden.

Eine Kappe kann durch Formschluss und/oder Kraftschluss befestigt sein. Eine Kappe kann durch Formschluss und/oder Kraftschluss lösbar befestigt sein und kann dann also ohne Zerstörung gelöst werden.

Es ist aber auch möglich, dass eine Kappe nicht austauschbar ist und dann nur durch Zerstörung gelöst werden kann. Eine solche Kappe kann durch Stoffschluss befestigt sein. Eine solche Kappe kann beispielsweise angespritzt worden sein.

Ein Fuß oder eine Kappe des Fußes können so sein, dass dieser Fuß bzw. diese Kappe kein Saugnapf ist. Es handelt sich dann also nicht um ein Befestigungsmittel, das sich mittels Unterdruck an einer glatten Oberfläche festsaugen kann. Es kann aber sein, dass ein rutschhemmender Fuß als Saugnapf ausgebildet ist.

Die Füße, beispielsweise als Füße dienende ein oder mehrere Noppen, können beim Rand des Bodens angeordnet sein. Füße können dann untereinander einen besonders großen Abstand aufweisen, was die Standsicherheit verbessern kann.

Die Füße können entlang einer bogenförmigen Linie angeordnet sein, um für Standsicherheit sorgen zu können. Die bogenförmige Linie kann wie ein U oder zumindest näherungsweise wie ein U geformt sein. Ein jeder Schenkel der U-förmigen Linie kann einen Fuß aufweisen. Ein jeder Schenkel der U-förmigen Linie kann einen rutschhemmenden Fuß aufweisen. Vorzugsweise weist ein jeder Schenkel der U-förmigen Linie genau einen rutschhemmenden Fuß auf. Ein Gleitfuß kann sich im Grund der U-Form befinden.

Die Füße, beispielsweise Noppen, können entlang eines bogenförmigen Rands des Bodens oder parallel zu einem bogenförmigen Rand des Bodens angeordnet sein. Der bogenförmige Rand kann U-förmig oder zumindest näherungsweise U-förmig sein. Die vorgenannte bogenförmige bzw. U-förmige Linie kann also der Rand des Bodens sein oder unmittelbar an den Rand angrenzen.

Es können genau drei Füße, also nur drei Füße, für ein Aufstellen auf einem Untergrund vorhanden sein, damit das Küchengerät auch dann sehr standsicher aufgestellt werden kann, wenn der Untergrund nicht vollkommen eben ist. Vorzugsweise gibt es genau zwei rutschhemmende Füße und genau einen Gleitfuß.

Es können mehr als drei Füße vorhanden sein. Die Anzahl der Gleitfüße kann gleich oder geringer sein als die Anzahl der rutschhemmenden Füße.

Die Füße können vom Boden des Küchengeräts senkrecht nach unten abstehen, um für Standsicherheit zu sorgen. Füße können vertieft positioniert sein. Damit ist gemeint, dass Füße in eine Mulde bzw. Ausnehmung eingelassen sind bzw. hineinreichen. Die Mulde bzw. Ausnehmung ist in Aufsicht auf die Unterseite des Bodens zu sehen. Dadurch wandert der Schwerpunkt vorteilhaft etwas nach unten. Die Mulde kann zugleich eine Griffmulde sein.

Der Schwerpunkt des Küchengeräts kann sich in Aufsicht auf das Küchengerät gesehen zur Verbesserung der Standsicherheit zwischen den Füßen befinden oder bevorzugt zumindest näherungsweise mittig zwischen den Füßen.

Der Boden des Küchengeräts kann eine langgestreckte Form mit zwei langen Seiten und im Vergleich dazu zwei schmalen Stirnseiten aufweisen. Ein Bedienfeld des Küchengeräts kann bei einer schmalen Stirnseite angeordnet sein.

Das Bedienfeld kann mit der genannten Ebene einen Winkel kleiner als 90° einschließen, um leicht erreichbar zu sein.

Die schmale Stirnseite, bei der das Bedienfeld angeordnet ist, kann geradlinig verlaufen. Wird eine geradlinig verlaufende Seite des Bodens ergriffen und leicht angehoben, dann wird dadurch das Küchengerät quasi automatisch durch das Ergreifen gegen ein seitliches Kippen gesichert. Insbesondere dann kann ein einziger Gleitfuß genügen, der bei der gegenüberliegenden Seite des Küchengeräts angeordnet ist. Vorzugsweise gibt es dann aus Gründen der Stand sicherheit nur zwei rutschfeste Füße, um das Küchengerät zuverlässig rutschfest aufstellen zu können, und nur einen Gleitfuß.

Die schmale Stirnseite, bei der das Bedienfeld angeordnet ist, kann mit einer langen Seite des Küchengeräts einen rechten Winkel einschließen.

Es kann ein Drucksensor für eine Gewichtsmessung vorhanden sein. In einem Fuß kann der Drucksensor integriert sein. Im jeden Fuß kann ein Drucksensor integriert sein. Ein Fuß kann mit einem Drucksensor verbunden sein. Ein jeder Fuß kann mit einem Drucksensor verbunden sein. Alle Füße können mit einem einzigen Drucksensor verbunden sein. Durch die ein oder mehreren Drucksensoren kann ein Gewicht gemessen werden. Die ein oder mehreren Drucksensoren können verwendet werden, um beispielsweise das Gewicht von Nahrungsmitteln wiegen zu können. Das Küchengerät kann also eine Waage sein oder eine Waage umfassen. Ein Fuß ist dann so gestaltet, dass ein Druck auf die Oberseite des Küchengeräts durch einen Drucksensor in einen Messwert umgewandelt werden kann. Mithilfe der ein oder mehreren erzeugten Messwerte kann das Gewicht eines Nahrungsmittels bestimmt werden, wenn das Nahrungsmittel auf das Küchengerät aufgelegt worden ist. Das Küchengerät kann eine Steuerelektronik umfassen, mit der das Gewicht eines aufgelegten Nahrungsmittels aus ein oder mehreren Messwerten bestimmt werden kann.

Der Boden des Küchengeräts kann eine Griffmulde umfassen, um das Küchengerät leicht anheben zu können. Die Griffmulde kann Lüftungsöffnungen umfassen, damit Lüftungsöffnungen einen vergleichsweise großen Abstand zum Untergrund aufweisen können, um so zuverlässig arbeiten zu können. Lüftungsöffnungen können an der Unterseite des Küchengeräts angeordnet sein, damit Flüssigkeit in der Praxis nicht in das Innere des Küchengeräts eindringen kann. Füße können zumindest teilweise mit der Griffmulde überlappen, um Randbereiche des Bodens in mehrfacher Hinsicht vorteilhaft ausnutzen zu können. Füße können näher beim Rand des Bodens angeordnet sein als Lüftungsöffnungen und/oder als die Griffmulde, um so verhindern zu können, dass ein Stromversorgungskabel der Küchenmaschine unter den Boden des Küchengeräts gelangen kann. Dies könnte die Standsicherheit des Küchengeräts beeinträchtigen. Außerdem könnte ein Wiegeergebnis verfälscht werden, wenn Füße zumindest einen Drucksensor für ein Wiegen umfassen.

Der Boden kann eine ebene Außenseite bzw. eine ebene Oberfläche umfassen. Der Boden kann nach innen bzw. nach oben gewölbt sein, um beispielsweise eine Griffmulde bereitzustellen. Die Griffmulde kann beispielsweise randseitig vorhanden sein, um die Griffmulde auch im aufgestellten Zustand des Küchengeräts erreichen zu können. Die Oberfläche bzw. Außenseite des Bodens kann zumindest überwiegend geschlossen sein, um einen Innenraum des Küchengeräts beispielsweise vor Staub und Flüssigkeit zu schützen. Der Boden kann Teil eines Gehäuses des Küchengeräts sein. Das Gehäuse des Küchengeräts kann an seiner Oberseite vollständig geschlossen sein, um den Innenraum des Gehäuses des Küchengeräts vor Staub und Flüssigkeit zu schützen.

Ein Fuß oder ein Teil eines Fußes kann mit dem Boden einstückig verbunden sein. Der Boden kann also zusammen mit einem Fuß oder einem Teil eines Fußes in einem Arbeitsschritt beispielsweise durch Spritzgießen gefertigt worden sein. Ist ein Fuß mit dem Boden einstückig verbunden, so ist ein Boden nicht getrennt von einem Fuß hergestellt worden. Dies schließt nicht aus, dass der Boden mehrere Teile umfassen kann, so zum Beispiel eine Abdeckung oder Kappe. Ein Fuß kann aus nur einem Teil bestehen, also in einem Stück gefertigt worden sein. Der Boden kann aus nur einem Teil bestehen, also in einem Stück gefertigt worden sein.

Ein jeder Fuß kann getrennt von dem Boden in einem Arbeitsschritt einstückig oder in mehreren Arbeitsschritten hergestellt worden sein. Nach der Herstellung kann ein jeder Fuß beispielsweise mit dem Boden des Küchengeräts oder mit einer anderen Seite bzw. Wandung des Küchengeräts stoffschlüssig, kraftschlüssig und/ oder formschlüssig verbunden worden sein. Ein Fuß kann mit dem Boden des Küchengeräts stoffschlüssig verbunden worden sein, indem der Fuß mit dem Boden des Küchengeräts durch Kleben oder Schweißen verbunden worden ist. Ein Fuß kann mit dem Boden des Küchengeräts kraftschlüssig verbunden worden sein, indem der Fuß in einer Ausnehmung im Boden eingeklemmt worden ist und also klemmend innerhalb der Ausnehmung gehalten wird. Ein Fuß kann mit dem Boden des Küchengeräts formschlüssig verbunden worden sein, indem der Fuß mit dem Boden des Küchengeräts durch Verschrauben oder durch einen Bajonettverschluss verbunden worden ist. Ein Fuß kann mit dem Boden des Küchengeräts formschlüssig verbunden worden sein, indem der Fuß mit dem Boden des Küchengeräts verrastet worden ist.

Ein Fuß kann durch eine Stange oder einen anderen langgestreckten Gegenstand bereitgestellt sein. Ein Ende der Stange bzw. ein stirnseitiges Ende des anderen langgestreckten Gegenstands kann dann eine Aufstellfläche sein. Ein Fuß kann eine Noppe sein, also eine höckerartige Erhebung auf einer Oberfläche. Ein Fuß kann plattenförmig bzw. ein Plättchen sein. Ein Fuß kann aus einem Teil oder aus mehr als einem Teil gebildet sein. Eine Grundfläche eines Fußes kann beispielsweise oval, kreisrund, dreieckig, rechteckig oder quadratisch sein. Die Grundfläche des Fußes kann mit dem Boden oder mit einer anderen Wandung verbunden sein. Ein Fuß kann sich zur Ebene hin verjüngen, so zum Beispiel ausgehend von der vorgenannten Grundfläche.

Das Küchengerät kann einen Elektromotor, ein Gefäß und ein Misch- und/oder Schneidwerkzeug im Gefäß umfassen. Das Misch- und/oder Schneidwerkzeug kann über eine Welle durch den Motor angetrieben werden.

Es zeigen:
- Figur 1:: seitliche Ansicht eines Küchengeräts;
- Figur 2:: Aufsicht auf Boden des Küchengeräts;
- Figur 3:: Schnitt durch rutschhemmenden Fuß mit Drucksensor.
- Figur 4:: Schnitt durch Gleitfuß mit Drucksensor.
- Figur 5:: seitliche Ansicht eines Küchengerätes mit Gefäß

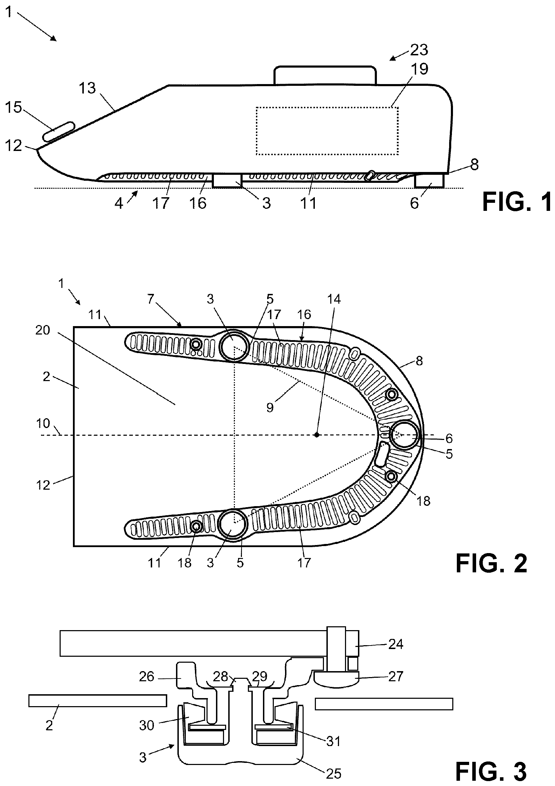

Die Figur 1 zeigt ein Küchengerät 1 in seitlicher Ansicht. Die Figur 2 zeigt eine Aufsicht auf den Boden 2 des Küchengeräts 1. Von der Unterseite des Boden 2 können Füße beispielsweise in Form von Noppen 3, 6 nach unten zum Beispiel senkrecht abstehen. Genau drei Füße 3, 6 sind aus Gründen der Standsicherheit zu bevorzugen. Die Füße 3, 6 können in einer Ebene 4 unterhalb des Bodens 2 enden. Im Boden 2 kann es Ausnehmungen 5 geben. Die Ausnehmungen 5 können einen kreisrunden Durchmesser haben. Die darin gehaltenen Füße 3, 6 können zumindest abschnittsweise einen kreisrunden Durchmesser haben. Ein jeder Fuß 3, 6 kann in eine Ausnehmung 5 des Bodens 2 hineinreichen. In einer Ausnehmung 5 oder hinter einer lochartigen Ausnehmung 5 kann ein Fuß 3, 6 klemmend gehalten sein. In einer Ausnehmung 5 oder hinter einer lochartigen Ausnehmung 5 kann ein Fuß 3, 6 eingerastet und so gehalten sein. Ein Fuß 3, 6 kann mithilfe eines Gewindes, also beispielsweise mit ein oder mehreren Schrauben, befestigt sein.

Zwei Füße 3 können rutschhemmende Füße sein. Ein Fuß 6 kann ein Gleitfuß sein.

Die Füße 3, 6 können beim Rand 7 des Bodens 2, d. h., in der Nähe des Rands 7 angeordnet sein, wie dies in der Figur 2 zu sehen ist. Der Abstand zwischen einem Fuß 3, 6 und einem benachbarten Randbereich des Bodens 2 kann dann in Aufsicht auf den Boden 2 gesehen beispielsweise kleiner als 4 cm oder kleiner als 2 cm oder kleiner als 1 cm sein. Der Boden 2 kann, wie in der Figur 2 zu sehen ist, durch einen bogenförmigen Rand 8, also einen Bogen, an einer Stirnseite begrenzt sein. Der bogenförmige Rand 8 ist dann ein Teil des Rands 7. Die Füße 3, 6 können entlang des bogenförmigen Rands 8 und/ oder parallel zu dem bogenförmigen Rand 8 des Bodens 2 angeordnet sein, wie dies in der Figur 2 zu sehen ist.

Die Füße 3, 6 können nicht entlang einer geraden Linie angeordnet sein. Die drei Füße 3, 6 spannen dann ein Dreieck 9 auf, wie dies in der Figur 2 angedeutet wird. Es kann ein gleichschenkliges Dreieck 9 sein. Dadurch ist es möglich, dass das Küchengerät 1 besonders standsicher aufzustellen. Die Füße 3, 6 können spiegelsymmetrisch angeordnet sein. Die zugehörige Symmetrieachse 10 kann mittig durch den bogenförmigen Rand 8 verlaufen, wie dies in der Figur 2 angedeutet wird. Die zugehörige Symmetrieachse 10 kann mittig durch die andere Stirnseite 12 verlaufen, wie dies in der Figur 2 angedeutet wird.

Der Boden 2 kann langgestreckt sein, also zwei lange Seiten 11 und im Vergleich dazu zwei kurze Stirnseiten 8 und 12 aufweisen. Die Symmetrieachse 10 kann durch die beiden Stirnseiten 8 und 12 hindurchlaufen. Der Boden 2 kann in Richtung der Seite 12 mit dem Bedienfeld 13 wie in der Figur 1 gezeigt sich zum Beispiel bogenförmig nach oben erstrecken, damit der Boden 2 in diesem Bereich für ein Anheben und Verschieben des Küchengeräts 1 ergriffen werden kann.

Das Küchengerät kann ein Bedienfeld 13 aufweisen. Das Bedienfeld 13 kann ein beispielsweise berührungsempfindliches Display umfassen, über das das Küchengerät 1 bedient werden kann. Über das Display können Zustände des Küchengeräts 1 angezeigt werden. Es ist möglich, dass sas Display alternativ oder ergänzend für Steueraufgaben verwendet werden kann. Das Bedienfeld 13 kann zumindest einen Schalter oder Druck-/Drehknopf 15 umfassen, durch den das Küchengerät 1 bedient werden kann. Das Bedienfeld 13 kann, von der Oberseite auf das Küchengerät 1 gesehen, sichtbar sein. Das Bedienfeld 13 kann gegenüber einem ebenen Untergrund bzw. der Ebene 4 schräg verlaufen, um gut sichtbar und erreichbar zu sein. Der Winkel kann aus diesem Grund kleiner als 60° oder kleiner als 45° oder kleiner als 35° sein, den das Bedienfeld 13 mit der Ebene 4 einschließt. Das Bedienfeld 13 kann aus Gründen der Standsicherheit bei einer Stirnseite 8 angeordnet sein. Ein hoher Druck auf das Bedienfeld 13 kann dann unkritisch sein, weil aufgrund der langgestreckten Form des Bodens 2 eine Kippgefahr dann besonders gering sein kann.

Das Bedienfeld 13 kann sich an einer Stirnseite 12 oder unmittelbar angrenzend an eine Stirnseite 12 befinden, die geradlinig verläufen und die mit der Symmetrieachse 10 einen rechten Winkel einschließen kann. Wird das Bedienfeld 13 durch einen übermäßig hohen Druck nach unten gedrückt, dann kann die Stirnseite 12 geradlinig auf dem Untergrund aufsetzen, wodurch die Lage des Küchengeräts 1 stabilisiert werden kann.

Der Schwerpunkt 14 des Küchengeräts 1 kann von dem Bedienfeld 13 aus gesehen in der hinteren Hälfte oder im hinteren Drittel des Bodens 2 des Küchengeräts 1 sein (siehe Figur 2). Dabei ist die Lage des Schwerpunkts 14 in Aufsicht auf das Küchengerät 1 gemeint (siehe Figur 2). Wird nun das Küchengerät bei der Stirnseite 12 geringfügig angehoben, dann wird sich zumindest ein Gleitfuß 3 vom Untergrund lösen. Aufgrund der Lage des Schwerpunktes 14 kann dies leicht und sicher geschehen. Im Anschluss daran kann das Küchengerät leicht verschoben werden.

Die Symmetrieachse 10 kann durch den Schwerpunkt 14 hindurch laufen, wie dies in der Figur 2 zu sehen ist. Die Füße 3, 6 können um den Schwerpunkt 14 herum angeordnet sein, um für eine große Standsicherheit zu sorgen. Der Schwerpunkt 14 kann aus Gründen der Standsicherheit gleiche Abstände zu den Füßen 3 aufweisen, also zu jedem Fuß 3 gleich weit entfernt sein. Der Schwerpunkt 14 des Küchengeräts 1 befindet sich dann mittig zwischen den Füßen 3.

Insbesondere rutschhemmende Füße 3 können ganz oder teilweise aus einem elastischen Material bestehen, um rutschhemmend zu sein. Insbesondere kann das Material eines rutschhemmenden Fußes 3 elastischer als das Material des Gehäuses und/oder des Bodens 2 des Küchengeräts 1 sein.

Der Boden 2 kann beispielsweise randseitig nach innen bzw. nach oben gewölbt sein, um eine Griffmulde 16 bereitzustellen. Ist das Küchengerät 1 auf einem Untergrund aufgestellt, dann kann die Griffmulde 16 erfasst werden, um das Küchengerät sicher anheben zu können. Die Griffmulde 16 kann sich, in Aufsicht auf das Küchengerät gesehen, um den Schwerpunkt 14 des Küchengeräts 1 herum erstrecken, um ein sicheres Anheben des Küchengeräts zu ermöglichen (siehe Figur 2). Die Griffmulde 16 kann sich, wie in der Figur 2 gezeigt, näherungsweise U-förmig um den Schwerpunkt 14 des Küchengeräts 1 herum erstrecken.

Die Griffmulde 16 kann Lüftungsöffnungen 17 umfassen, durch die hindurch ein Luftaustausch aus Kühlungsgründen möglich ist. Dieses Anordnen von Lüftungsöffnungen 17 stellt einen relativ großen Abstand zum Untergrund sicher, was sich günstig auf den angestrebten Luftaustausch und damit günstig auf eine Kühlung auswirken kann. Oberhalb des Bodens 2 können zu kühlende elektrische und/oder elektronische Einrichtungen vorhanden sein, wie zum Beispiel ein Elektromotor 19, mit dem beispielsweise ein Misch- und/oder Schneidwerkzeug des Küchengeräts 1 angetrieben werden kann, oder eine Steuerelektronik. Das Anordnen von Lüftungsöffnungen 17 angrenzend an den Randbereich des Bodens 2 kann ergänzend dazu beitragen, dass ein kühlender Luftaustausch möglichst ungehindert möglich ist. Flüssigkeit kann aufgrund der Anordnung an der Unterseite nicht in das Innere des Gehäuses eindringen. Wie in der Figur 2 gezeigt, kann der Abstand zwischen einem Fuß 3, 6 und dem Rand 7 des Bodens 2 geringer sein als der Abstand zwischen benachbarten Lüftungsöffnungen 17 und dem Rand 7 des Bodens 2. Mit benachbarten Lüftungsöffnungen 17 sind die Lüftungsöffnungen gemeint, die sich in unmittelbarer Nachbarschaft eines Fußes 3, 6 befinden. Das Küchengerät 1 kann ein Stromversorgungskabel mit einem Stecker haben. Wird der Stecker in eine elektrische Steckdose gesteckt, dann kann darüber das Küchengerät 1 mit Strom versorgt werden.

Die genannte Anordnung kann verhindern, dass ein solches Stromversorgungskabel unter die Griffmulde 16 gelangen kann, was den kühlenden Luftaustausch nachteilhaft beeinträchtigen könnte. Auch kann dadurch eine Funktion der Küchengeräts 1 beeinträchtigt werden wie zum Beispiel das Wiegen von Nahrungsmitteln.

Die Füße 3, 6 können zumindest teilweise mit der Griffmulde 16 überlappen, wie dies in der Figur 2 zu sehen ist, um den Raum im Randbereich des Bodens 2 optimal nutzen zu können.

Im Bereich der Griffmulde 16 kann es Verschraubungen 18 geben, um Komponenten wie Elektromotor 19 (siehe Figur 1) im Inneren des Küchengeräts 1 zu befestigen und/oder um Teile des Gehäuses des Küchengeräts 1 miteinander zu verbinden.

Die Griffmulde 16 kann einen ebenen Bereich 20 des Bodens 2 einschließen, der also parallel zu einem ebenen Untergrund bzw. der Ebene 4 verlaufen kann, wie dies die Figur 2 verdeutlich.

Das Küchengerät 1 kann an seiner Oberseite eine Kupplungseinrichtung 23 umfassen, um Zubehörteile mit dem Küchengerät 1 kuppeln zu können. Ein solches Zubehörteil kann beispielsweise ein Gefäß bzw. ein Topf sein. In einem solchen Gefäß kann sich beispielsweise ein Rühr- und/oder Schneidwerkzeug befinden, das beispielsweise über den genannten Elektromotor 19 angetrieben werden kann. Das Gefäß kann einen elektrischen Heizleiter umfassen, der über das Küchengerät 1 mit Strom für ein Erhitzen versorgt werden kann.

In der Figur 3 wird ein rutschhemmender Schuh 3 mit einem Drucksensor 24 im Schnitt gezeigt. Der rutschhemmende Schuh 3 umfasst an seiner Unterseite eine Kappe 25 aus einem rutschhemmenden Material. Ein Verbindungsglied 26 kann beispielsweise mit einer Schraube 27 an dem Drucksensor 24 befestigt sein. Die Kappe 25 kann einen Steg umfassen, der sich nach oben erstreckt und der in einem Kopf 28 endet. In eine beispielsweise umlaufende Nut unterhalb des Kopfes 28 kann ein Bügel 29 hineinreichen. Der Bügel 29 kann außerdem auf dem Verbindungsglied 26 aufliegen, wodurch die Kappe 25 mit dem Verbindungsglied 26 verbunden werden kann.

Eine Druckübertragungselement 30 kann an der Innenseite der Kappe 25, wie in der Figur 3 gezeigt, anliegen, um eine gleichmäßige Druckübertragung von der Kappe 25 auf den Drucksensor 24 sicherzustellen. Das Druckübertragungselement 30 kann aus einem Material mit größerer Festigkeit im Vergleich zum Material der Kappe 25 bestehen, um dies erreichen zu können.

Zusätzlich kann eine Lochscheibe 31 vorhanden sein, die auf dem Druckübertragungselement 30 aufliegen kann. Die Lochscheibe 31 kann durch einen beispielweise zylinderförmigen Abschnitt des Verbindungsglieds 26 kontaktiert sein, um so den Druck von der Kappe 25 auf den Drucksensor 24 übertragen zu können.

Die Kappe 25 kann aus einem Gummi oder einem Kunststoff bestehen. Das ausgewählte Material der Kappe 25 weist einen relativ großen Reibwert im Vergleich zu POM oder PE-UHMW. Die Kappe 25 kann aber auch nur eine unterste Schicht aus einem Material mit einem relativ großen Reibwert aufweisen.

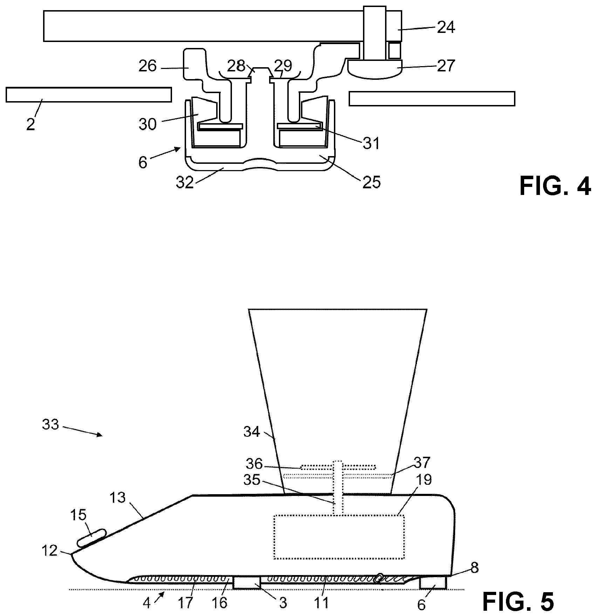

In der Figur 4 wird ein nicht rutschhemmender Schuh 6 mit einem Drucksensor 24 im Schnitt gezeigt. Der nicht rutschhemmende Schuh 6 unterscheidet sich von dem in der Figur 3 gezeigten rutschhemmenden Schuh 3 nur durch die Kappe 25. Die Kappe 25 besteht aus einem Material mit einem niedrigen Reibwert im Vergleich zum Material der Kappe 25 des rutschhemmenden Schuhs 3 oder eine unterste Schicht 32 besteht aus dem Material mit dem niedrigen Reibwert. Das Material mit dem niedrigen Reibwert kann POM oder PE-UHMW sein. Das Material mit dem niedrigen Reibwert kann ein Material sein, welches Glasfaser verstärkt ist, wie POM-GF26 . Ein Material mit niedrigem Reibwert wie die beispielhaft genannten Materialien erzeugen praktisch keine Kratzer auf einer Oberfläche. Vorzugsweise ist das Material mit dem niedrigen Reibwert weniger hart, also weicher, als das Material der Aufstellfläche des rutschhemmenden Schuhs, um verbessert Kratzer zu vermeiden, die durch ein Verschieben auf einer Oberfläche entstehen können.

In der Figur 5 wird ein Küchengerät 33 gezeigt, welches zusätzlich zu dem in der Figur 1 gezeigten Küchengerät 1 einen Gefäß 34 aufweist. Der Motor 19 kann über eine Welle 35 ein Misch-und/oder Schneidwerkzeug im Inneren des Gefäßes 34 antreiben. Im Boden des Gefäßes 34 kann eine Heizeinrichtung 37 vorhanden sein. Die Heizeinrichtung 37 kann beispielsweise durch elektrische Heizleiter gebildet sein. Die Heizeinrichtung 37 kann als eine Dickschichtheizung ausgebildet sein. Es kann sich um eine Platte handeln, die induktiv erhitzt werden kann.

## Patentansprüche

1. Elektrisches Küchengerät (1, 33) mit einem Boden (2), mit an der Unterseite des Bodens (2) vorhandenen Füßen (3, 6) für ein Aufstellen des Küchengeräts (1) auf einen ebenen Untergrund, wobei die Füße (3) in einer Ebene (4) unterhalb des Bodens (2) enden, **dadurch gekennzeichnet, dass** ein Fuß (3) rutschhemmend ist und ein anderer Fuß ein Gleitfuß (6) ist.

2. Küchengerät (1, 33) nach dem vorhergehenden Anspruch, **dadurch gekennzeichnet, dass** ein Bedienfeld (13) bei einer Seite des Küchengeräts vorhanden ist und sich der Schwerpunkt (14) des Küchengeräts vom Bedienfeld (13) aus sowie in Aufsicht auf das Küchengerät (1, 33) gesehen in der hinteren Hälfte des Küchengeräts (1) oder im hinteren Drittel des Küchengeräts (1) befindet.

3. Küchengerät (1, 33) nach dem vorhergehenden Anspruch, **dadurch gekennzeichnet, dass** das Bedienfeld (13) ein berührungsempfindliches Display ist oder ein berührungsempfindliches Display umfasst.

4. Küchengerät (1, 33) nach dem vorhergehenden Anspruch, **dadurch gekennzeichnet, dass** ein Gleitfuß (6) vom Bedienfeld (13) aus gesehen hinter dem Schwerkunkt (14) des Küchengeräts (1) angeordnet ist.

5. Küchengerät (1, 33) nach dem vorhergehenden Anspruch, **dadurch gekennzeichnet, dass** die Füße (3, 6) beim Rand des Bodens (2) angeordnet sind.

6. Küchengerät (1, 33) nach einem der vorhergehenden Ansprüche, **dadurch gekennzeichnet, dass** Füße (3, 6) entlang eines bogenförmigen Rands (8) des Bodens (2) oder parallel zu einem bogenförmigen Rand (8) des Bodens (2) angeordnet sind.

7. Küchengerät (1, 33) nach einem der vorhergehenden Ansprüche, **dadurch gekennzeichnet, dass** der Schwerpunkt (14) des Küchengeräts (1) in Aufsicht auf das Küchengerät (1, 33) gesehen sich zwischen den Füßen (3, 6) befindet oder mittig zwischen den Füßen (3, 6) befindet.

8. Küchengerät (1, 33) nach einem der vorhergehenden Ansprüche, **dadurch gekennzeichnet, dass** der Boden (2) eine langgestreckte Form mit zwei langen Seiten (11) und im Vergleich dazu zwei schmalen Stirnseiten (8, 12) umfasst, wobei ein Bedienfeld (13) des Küchengeräts (1) bei einer schmalen Stirnseite (12) angeordnet ist.

9. Küchengerät (1, 33) nach dem vorhergehenden Anspruch, **dadurch gekennzeichnet, dass** die schmale Stirnseite (12), bei der das Bedienfeld (13) angeordnet ist, geradlinig verläuft.

10. Küchengerät (1, 33) nach einem der vorhergehenden Ansprüche, **dadurch gekennzeichnet, dass** nur drei Füße (3, 6) für ein Aufstellen des Küchengeräts vorhanden sind, wobei vorzugsweise zwei Füße rutschhemend sind.

11. Küchengerät (1, 33) nach einem der vorhergehenden Ansprüche, **dadurch gekennzeichnet, dass** ein jeder Fuß eine austauschbare Kappe (25) aufweist und jede Kappe (25) gleich geformt und gleich groß ist.

12. Küchengerät (1, 33) nach einem der vorhergehenden Ansprüche, **dadurch gekennzeichnet, dass** ein Gleitfuß (6) eine aus POM oder PE-UHMW gebildete Aufstellfläche umfasst.

13. Küchengerät (1, 33) nach einem der vorhergehenden Ansprüche, **dadurch gekennzeichnet, dass** ein Drucksensor (24) für eine Gewichtsmessung vorhanden ist, der vorzugsweise mit einem Fuß so in Verbindung steht, dass ein Druck am Fuß gemessen werden kann.

14. Küchengerät (1, 33) nach einem der vorhergehenden Ansprüche, **dadurch gekennzeichnet, dass** der Boden (2) eine Griffmulde (16) mit Lüftungsöffnungen (17) umfasst, und Füße (3, 6) zumindest teilweise mit der Griffmulde überlappen.

15. Küchengerät (33) nach einem der vorhergehenden Ansprüche, **dadurch gekennzeichnet, dass** das Küchengerät (25) einen Elektromotor (19), ein Gefäß (34) und ein Misch- und/oder Schneidwerkzeug (36) im Gefäß (34) umfasst, wobei das Misch- und/oder Schneidwerkzeug (36) über eine Welle (35) durch den Motor (19) angetrieben werden kann.
